Europäisches Patentamt

European Patent Office

Office européen des brevets

(19)

(11) **EP 1 454 164 B1**

(12) **EUROPÄISCHE PATENTSCHRIFT**

(45) Veröffentlichungstag und Bekanntmachung des Hinweises auf die Patenterteilung:
**16.03.2005 Patentblatt 2005/11**

(51) Int Cl.⁷: **G01S 17/00**, G08G 1/015, G08G 1/052

(21) Anmeldenummer: 02794944.5

(22) Anmeldetag: **05.12.2002**

(86) Internationale Anmeldenummer:
**PCT/AT2002/000341**

(87) Internationale Veröffentlichungsnummer:
**WO 2003/052457 (26.06.2003 Gazette 2003/26)**

(54) **VERFAHREN UND VORRICHTUNG ZUR GEOMETRISCHEN VERMESSUNG UND GESCHWINDIGKEITSBESTIMMUNG VON FAHRZEUGEN**

METHOD AND DEVICE FOR THE GEOMETRIC MEASUREMENT AND SPEED DETERMINATION OF VEHICLES

PROCEDE ET DISPOSITIF DE MESURE GEOMETRIQUE ET PERMETTANT DE DETERMINER LA VITESSE DE VEHICULES

(84) Benannte Vertragsstaaten:
**AT BE BG CH CY CZ DE DK EE ES FI FR GB GR IE IT LI LU MC NL PT SE SI SK TR**
Benannte Erstreckungsstaaten:
**AL LT LV MK RO**

(30) Priorität: **14.12.2001 AT 19632001**

(43) Veröffentlichungstag der Anmeldung:
**08.09.2004 Patentblatt 2004/37**

(73) Patentinhaber: **Kapsch Trafficcom AG
1121 Wien (AT)**

(72) Erfinder: **SCHMIDRADLER, Dieter**
**A-1121 Wien (AT)**

(74) Vertreter: **Weiser, Andreas, Dr.
Patentanwalt,
Hietzinger Hauptstrasse 4
1130 Wien (AT)**

(56) Entgegenhaltungen:
**EP-A- 0 636 900    EP-A- 1 048 961
WO-A-90/09014    DE-A- 3 902 582
GB-A- 2 031 683    US-A- 4 789 941
US-B1- 6 195 019    US-B1- 6 304 321**

EP 1 454 164 B1

**Beschreibung**

Die vorliegende Erfindung betrifft ein Verfahren gemäß dem Oberbegriff des Anspruchs 1 und eine Vorrichtung gemäß dem Oberbegriff des Anspruchs 13.

Die Geometrie von Kraftfahrzeugen ist ein mögliches Bewertungskriterium für die Klassifizierung von Fahrzeugen, typische Anwendungsfelder sind dabei die Ermittlung von Tarifstufen zur Mauteinhebung, Anwendungen der Verkehrsleittechnik oder die statistische Erfassung von Verkehrsdaten.

Ein Verfahren und eine Vorrichtung der einleitend genannten Art sind aus der US 6,195,019 bekannt. Bei Annahme einer bekannten typischen Form von Fahrzeugen, z.B. Quaderform, lassen sich aus den Meßdaten eines einzigen, schräggestellten Laserscanners sowohl die konkreten geometrischen Daten des Fahrzeuges wie Länge, Breite, Höhe usw. als auch seine Geschwindigkeit bestimmen.

Aus der US 6,304,321 ist ein eine andere Art von Laserscanner bekannt, der mit einer Spiegelrolle gleichzeitig zwei gekreuzte Meßebenen erfaßt, jedoch von einem einzigen Montageort aus.

Die Erfindung setzt sich zum Ziel, ein Verfahren und eine Vorrichtung zu schaffen, mit welchen eine genauere und zuverlässigere Vermessung der Geometrie und Geschwindigkeit von Fahrzeugen durchgeführt werden kann als mit den bekannten Lösungen.

Dieses Ziel wird in einem ersten Aspekt der Erfindung mit einem Verfahren der einleitend genannten Art erreicht, das sich erfindungsgemäß dadurch auszeichnet, daß mit Hilfe mehrerer, über die Fahrbahnbreite verteilt angeordneter Laserscanner der genannten Art ein die Meßebenen zweier oder mehrerer der Laserscanner durchfahrendes Fahrzeug durch Auswertung der Meßdaten der Laserscanner im Verbund als ein und dasselbe Fahrzeug erkannt wird.

Gemäß der Erfindung werden mehrere über die Fahrbahnbreite verteilt angeordnete Laserscanner eingesetzt, die jeweils schräg zur Fahrtrichtung abtasten. Damit kann nicht nur die erfaßbare Fahrbahnbreite, d.h. der Gesamt-Meßbereich, vergrößert werden, sondern auch bei einem Großteil der Durchfahrten die Meßgenauigkeit: Aufgrund der Schrägstellung der Meßebenen der nebeneinander angeordneten Laserscanner passiert ein im mittleren Bereich der Fahrbahn durchfahrendes Fahrzeug gleich mehrere Meßebenen zeitlich hintereinander. Dadurch, daß ein die Meßebenen zweier oder mehrerer Laserscanner durchfahrendes Fahrzeug durch Auswertung der Meßdaten der Laserscanner im Verbund als ein und dasselbe Fahrzeug erkannt wird, kann eine entscheidende Erhöhung der Meßgenauigkeit und Meßzuverlässigkeit erreicht werden.

Gemäß einer bevorzugten Ausführungsform des Verfahrens der Erfindung wird in den zeitlich aufeinanderfolgenden Profilen der Repräsentation jener einer Fahrzeugkontur zugeordnete Meßpunkt ermittelt, welcher zu oder bevorzugt vor einem ersten Zeitpunkt eine signifikante longitudinale Position in Fahrtrichtung einnimmt, und die weiteren Positionsveränderungen des Meßpunktes werden in den darauffolgenden Profilen ermittelt, bis zu oder bevorzugt nach einem späteren zweiten Zeitpunkt vorübergehend keine signifikante Positionsveränderung mehr erfolgt, und die Geschwindigkeit des Fahrzeuges wird aus der Weg-Zeitdifferenz der zu den genannten Zeitpunkten ermittelten Positionen des Meßpunktes bestimmt.

Auf diese Weise wird mit Hilfe des schräggestellten Laserscanners in einem ersten Abschnitt das Passieren der Fahrzeugfront bzw. des Fahrzeughecks detektiert und die Geschwindigkeit aus der Bewegung derselben bzw. desselben ermittelt.

Eine wegen ihrer Einfachheit besonders vorteilhafte Variante besteht dabei darin, daß als signifikante longitudinale Position die maximale - oder eben minimale - longitudinale Position der Fahrzeugkontur gewählt wird.

Diese Ausführungsform eröffnet insbesondere auch eine besonders einfache Bestimmung der Länge des Fahrzeuges, indem in den zeitlich aufeinanderfolgenden Profilen jener einer Fahrzeugkontur zugeordnete Meßpunkt ermittelt wird, welcher zu einem dritten Zeitpunkt eine minimale - bzw. maximale - longitudinale Position in Fahrtrichtung einnimmt, und die Länge des Fahrzeuges aus der zuvor ermittelten Geschwindigkeit anhand der Gleichung

$$Länge = x_1 + (t_{ende} - t_1) \cdot Geschwindigkeit - x_{ende}$$

bestimmt wird.

In jedem Fall ist es besonders günstig, wenn die bestimmte Geschwindigkeit zur Skalierung der räumlichen Repräsentation verwendet wird, um daraus die dreidimensionale Geometrie des Fahrzeuges zu ermitteln.

Bevorzugt wird auch die Längsachsensymmetrie typischer Fahrzeugformen zur Korrektur der Meßdaten herangezogen, um die Genauigkeit und Zuverlässigkeit zu erhöhen.

Zur Erhöhung der Meßgenauigkeit wird bevorzugt die Weg-Zeitdifferenz bei der Durchfahrt zweier Meßebenen zur Überprüfung der vom ersten Laserscanner ermittelten Geschwindigkeit herangezogen und bei einer Fehlermittlung derselben durch den ersten Laserscanner werden dem Fahrzeug eine aus der Weg-Zeitdifferenz bestimmte Geschwindigkeit und Fahrzeuglänge zugewiesen.

In jedem Fall ist es besonders günstig, wenn das Passieren eines weiteren, quer zur Fahrbahn abtastenden Laserscanners zur Triggerung weiterer Geräte, wie Kameras usw., herangezogen wird und/oder die Ausgabe der bestimmten Geometrie- und Geschwindigkeitsdaten auslöst. In ersterem Fall können z.B. Fotos des passierenden Fahrzeuges für Archivierungs- und Nachweiszwecke geschossen werden, in letzterem Fall ist gewährleistet, daß die ermittelten Daten in zeitlicher Relation zur Durchfahrt ausgegeben werden. Dies kann alternativ auch durch das Ermitteln einer vorgegebenen Längsposition des Fahrzeuges auf der Fahrbahn erreicht werden.

Bevorzugt kann auch vorgesehen werden, die Beobachtung und Verfolgung von ausgewählten Fahrzeugtypen über einen größeren Fahrbahnlängsabschnitt mit Hilfe zumindest eines weiteren, längs der Fahrbahn abtastenden Laserscanners fortzusetzen.

Mit Hilfe von optionalen Sensoren, insbesondere Drucksensoren in der Fahrbahn, kann ferner bevorzugt auch die Anzahl von Fahrzeugachsen eines Fahrzeuges ermittelt wird, was ein weiteres Kriterium für die Fahrzeugklassifizierung liefert.

Das erfindungsgemäße Verfahren kann besonders einfach kalibriert werden. Dazu ist es lediglich erforderlich, aus der mehrmaligen Passage eines Fahrzeuges bekannter Geometrie und bekannter Geschwindigkeit die genaue Einbaulage des Laserscanners zu ermitteln.

In einem zweiten Aspekt der Erfindung werden die oben genannten Ziele mit einer Vorrichtung der einleitend genannten Art erreicht, die sich durch die kennzeichnenden Merkmale des Anspruchs 13 auszeichnet.

Bevorzugte Merkmale der erfindungsgemäßen Vorrichtung sind in den Unteransprüchen angeführt. Hinsichtlich der Vorteile dieser Ausführungsformen wird auf die entsprechenden Ausführungen zum Verfahren verwiesen.

Weitere Merkmale und Vorteile der Erfindung ergeben sich aus der nachfolgenden Beschreibung anhand von in den beigeschlossenen Zeichnungen dargestellten Ausführungsbeispielen. In den Zeichnungen zeigen

 die Fig. 1a bis 1c ein Beispiel für eine Sensoranordnung in der Draufsicht (Fig. 1a), in der Vorderansicht (Fig. 1b) und in der Seitenansicht (Fig. 1c);
 Fig. 2 an einem Beispiel das Prinzip der Objektvermessung in vier zeitlich aufeinanderfolgenden, beispielhaft herausgegriffenen Meßzyklen, die in der Zeichnung übereinander, u.zw. in der linken Hälfte jeweils in der Seitenansicht und in der rechten Hälfte in der Vorderansicht, dargestellt sind;
 die Fig. 3a und 3b zwei Ausführungsformen des Prinzips der Meßdatenerfassung und -auswertung in Blockschaltbildform;
 die Fig. 4a und 4b ein Beispiel für einen Verbund von Laserscannern in der Vorderansicht (Fig. 4a) und in der Draufsicht (Fig. 4b); und
 die Fig. 5a und 5b zwei weitere Beispiele für Erweiterungsmöglichkeiten des Verfahrens bzw. der Vorrichtung.

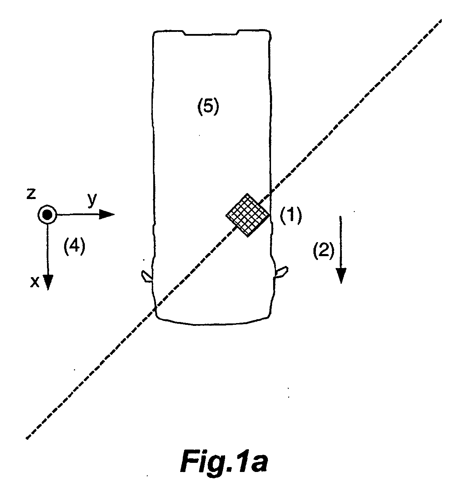

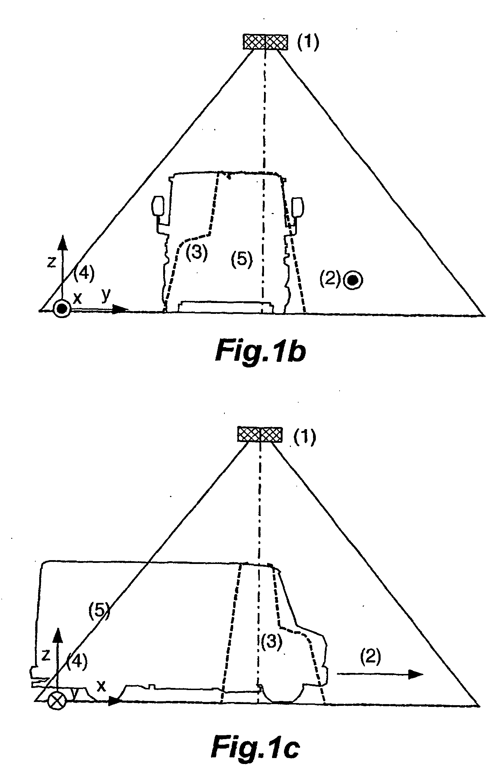

Die Fig. 1a bis 1c zeigen ein Beispiel für eine vorteilhafte Realisierung der Erfindung. Im vorliegenden Beispiel wird ein über der Fahrbahn montierter Laserscanner 1 verwendet, dessen Meßebene etwa 45° gegen die Fahrtrichtung 2 verdreht ist. Dadurch wird erreicht, daß bei jedem Abtast- bzw. Meßzyklus Z Distanzwerte 3 ($d_z(\varphi)$) für einen Satz von Winkelwerten ($\varphi \in [\varphi_{min} \ldots \varphi_{max}]$) bereitgestellt werden, die sowohl laterale als auch longitudinale Geometrieinformation repräsentieren.

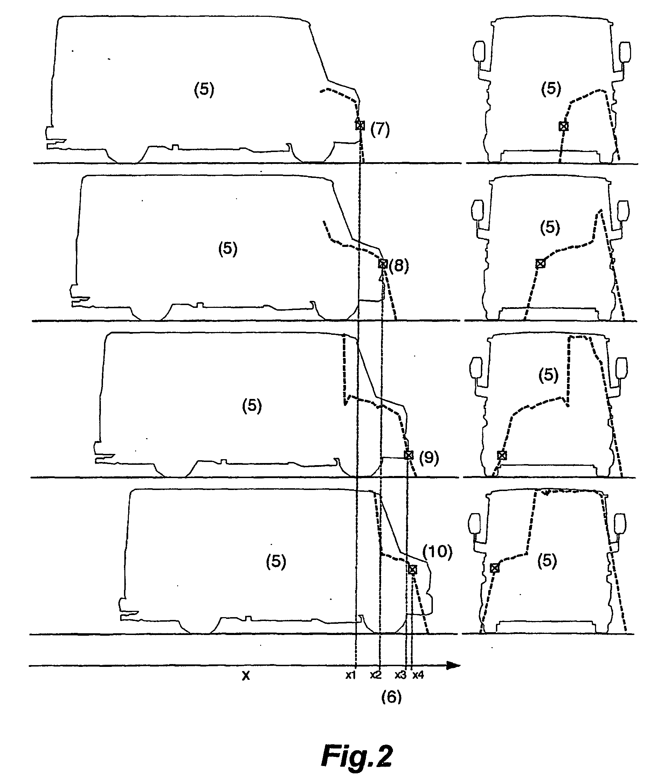

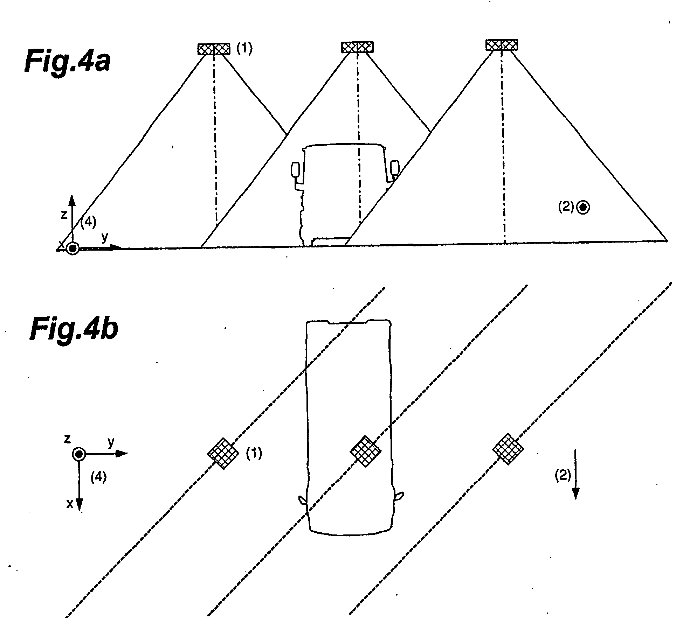

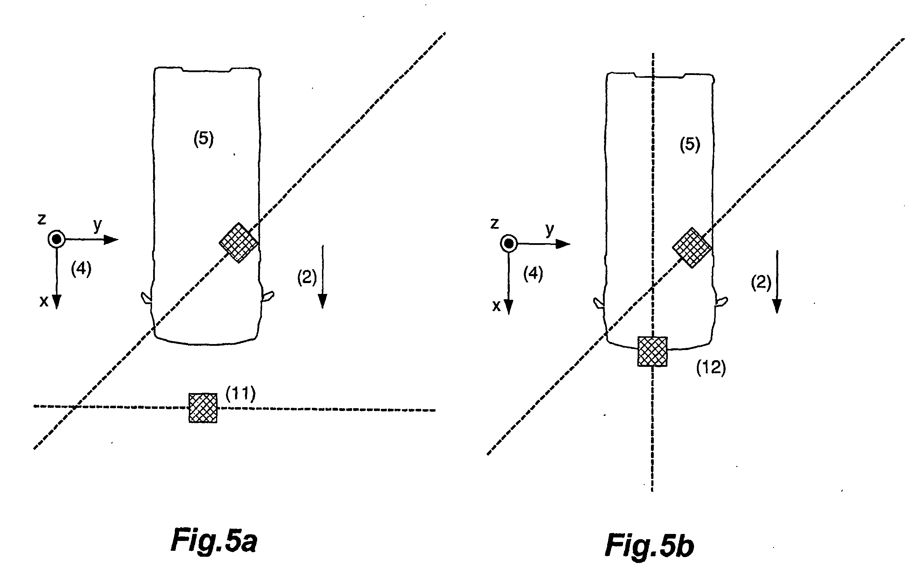

Die Meßebene des (bzw. jedes) Laserscanners 1 ist in den Draufsichten der Fig. 1a und der später näher erläuterten Fig. 4b, 5a und 5b als strichlierte Linie dargestellt; in den Vorder- bzw. Seitenansichten der Fig. 1b, 1c und 2 zeigt die strichlierte Linie jeweils die vom Laserscanner 1 in der Meßebene abgetastete, d.h. von seiner Position aus beobachtete Fahrzeugkontur.

Es ist zu beachten, daß die Meßebene des bzw. jedes Laserscanners 1 nicht notwendigerweise - wie dargestellt - vertikal und in einem Winkel von 45° zur Fahrtrichtung 2 orientiert sein muß. Für die Zwecke der Erfindung genügt es, daß die Meßebene in einem geeigneten Winkel gegen die Normalebene zur Fahrtrichtung 2 verdreht ist; dies schließt z.B, auch nicht-vertikale Schrägstellungen der Meßebene gegenüber der Fahrtrichtung 2 ein. In gleicher Weise ist es nicht zwingend, daß der bzw. die Laserscanner 1 oberhalb der passierenden Fahrzeuge 5 zu liegen kommen; wesentlich ist nur, daß sie oberhalb des Fahrbahnniveaus liegen, um die passierenden Fahrzeuge in einer gegenüber der Normalebene zur Fahrtrichtung verdrehten Meßebene abtasten zu können. Demgemäß umfaßt der Ausdruck "in einem geeigneten Winkel gegen die Normalebene zur Fahrtrichtung verdreht" auch eine Anordnung des bzw. der Laserscanner 1 seitlich neben den passierenden Fahrzeugen, solange ihre Meßebenen entsprechend orientiert sind.

Sofern nicht der Scanner 1 bereits selbst genaue Zeitinformationen für die Meßwerterfassung bereitstellt, kann anhand der bekannten Sensoreigenschaften Drehzahl n, der bekannten Bauart des Laserscanners (Anzahl der Meßzyklen je Umdrehung etc.) und mit der dem Meßwert zugeordneten Winkellage $\varphi$ eine Zeitinformation $t(Z,\varphi)$ abgeleitet werden; für einen handelsüblichen Laserscanner mit einer rotierenden Spiegelfläche, bei dem die Winkellage des Laser-Strahles der Winkellage des Spiegels gleichgesetzt werden kann, ergibt sich beispielsweise

$$t(Z,\varphi) = t_0 + (Z + \varphi/360°)/n$$

Ein gemeinsamer Referenzzeitpunkt $t_0$ kann dabei beliebig gewählt werden.

Nach Umrechnung der Meßwerte in ein kartesisches Koordinatensystem 4 kann die der Meßdatenauswertung zugrundeliegende Information anschaulich in einem vierdimensionalen Koordinatensystem

$$P_z = (x,y,z,t)_z = (x_z, y_z, z_z, t_z)$$

dargestellt werden.

Aus den Fig. 1a bis c geht weiters hervor, daß sich die Vermessung von Fahrzeughöhe und Fahrzeugbreite - einschließlich der Bestimmung seiner *lateralen* Fahrzeugposition, d.h. in Richtung quer zur Fahrtrichtung 2 - praktisch kaum von der bereits bekannten Meßtechnik unterscheidet, sodaß darauf nicht weiter eingegangen zu werden braucht.

Fig. 2 zeigt genauer das grundlegende Prinzip der erfindungsgemäßen Bestimmung von Fahrzeugge*schwindigkeit* und Fahrzeug*länge* - einschließlich der Bestimmung seiner *longitudinalen* Fahrzeugposition, d. h. in Richtung *parallel* zur Fahrtrichtung 2.

Zunächst wird die Fahrzeuggeschwindigkeit bestimmt:

Eine Objektvermessung wird begonnen, sobald ein Fahrzeug 5 in der Meßebene erkannt wird, d. h. zu einem Zeitpunkt $t_1$ erstmals in die Meßebene eintritt (in Fig. 1a mit seinem linken Fahrzeugbug). Dabei wird die aktuelle longitudinale Position (in Fig. 2 auf der X-Achse 6 aufgetragen) innerhalb der Meßebene festgestellt, indem nach jenem dem Fahrzeug zugeordneten Meßpunkt 7 gesucht wird, der die maximale longitudinale Position $x_1$ aufweist. Der Meßpunkt 7 wird als erste Referenz $P_1(x_1,t_1)$ für die Berechnung der Geschwindigkeit herangezogen.

In den darauffolgenden Meßzyklen werden in gleicher Weise weitere Meßpunkte 8, 9, 10 ermittelt.

Ein Vergleich der zwischen den Meßpunkten 7 und 8; 8 und 9; 9 und 10; usw. detektierten Wegunterschiede $x_2-x_1$, $x_3-x_2$, $x_4-x_3$ usw. läßt darauf schließen, daß der Meßpunkt 10 *nicht* mehr der Fahrzeugfront zugeordnet werden kann, d.h. das Fahrzeug 5 nun in seiner vollen Breite in die Meßebene eingefahren ist. Der vorhergehende Meßpunkt 9 wird somit als zweite Referenz $P_3(x_3,t_3)$ für die Berechnung der Geschwindigkeit herangezogen.

In dem von erster und zweiter Referenz $P_1$ ($x_1$, $t_1$), 7 und $P_3(x_3,t_3)$, 9 begrenzten Beobachtungsfenster wird nun ein repräsentatives Paar von Meßwerten $P_a$ ($x_a,t_a$) und $P_b(x_b,t_b)$ mit $t_1 \leq t_a < t_b \leq t_3$ herangezogen und daraus die Geschwindigkeit anhand der Weg-Zeitdifferenz:

$$\text{Geschwindigkeit} = \frac{x_b - x_a}{t_b - t_a}$$

ermittelt.

Bevorzugt werden die Punkte $P_a$ und $P_b$ in einem gewissen Abstand von den Referenzpunkten $P_1$ und $P_3$ gewählt, um die Gefahr von Randfehlern zu minimieren, d.h. $t_1 < t_a$ und $t_b < t_3$.

Es ist leicht zu erkennen, daß es grundsätzlich unbedeutend ist, ob nur die Fahrzeugfront, das Heck, ein anderes charakteristisches Detail der Fahrzeugkontur oder eine wiederholte Messung an mehreren Stellen zur Bestimmung der Fahrgeschwindigkeit zugrundegelegt und ob jeweils nur einzelne oder geeignet gewählte Scharen von Meßwerten herangezogen werden.

Zudem kann unter Einbeziehung einer Symmetriebedingung (Symmetrie des Fahrzeuges bezüglich seiner Längsachse) in Verbindung mit der festgestellten lateralen Fahrzeugposition und Gesamtbreite eine weitere Steigerung der Meßgenauigkeit erzielt werden. Derartige Verfahren sind bekannt und werden deshalb nicht weiter beschrieben.

Die Bestimmung der Fahrzeuglänge (und damit auch seiner longitudinalen Position) wird wie folgt durchgeführt:

Im weiteren Verlauf wird nun in jedem Meßzyklus nach dem dem Fahrzeug zugeordneten Meßpunkt $P_{ende}(x_{ende}, t_{ende})$ mit der minimalen longitudinalen Position gesucht, d.h. jenem Punkt, welcher anzeigt, daß das Fahrzeug den Meßbereich verlassen hat.

Die Fahrzeuglänge kann damit aus einem Vergleich der longitudinalen Positionen $x_1$ und $x_{ende}$ des ersten Meßpunktes 7 (mit der maximalen longitudinalen Position) und des letzten Meßpunktes $P_{ende}$ (mit der minimalen longitudinalen Position) unter Berücksichtigung des vom Fahrzeug in der Zeit $t_{ende}-t_1$ zurückgelegten Weges ermittelt werden als:

$$\text{Länge} = x_1 + (t_{ende} - t_1) \cdot \text{Geschwindigkeit} - x_{ende}$$

Sinngemäß wird ein Fahrzeug behandelt, welches sich in umgekehrter Richtung durch den Meßbereich bewegt, wobei lediglich jeweils die maximale longitudinale Position durch die minimale zu ersetzen ist und vice versa.

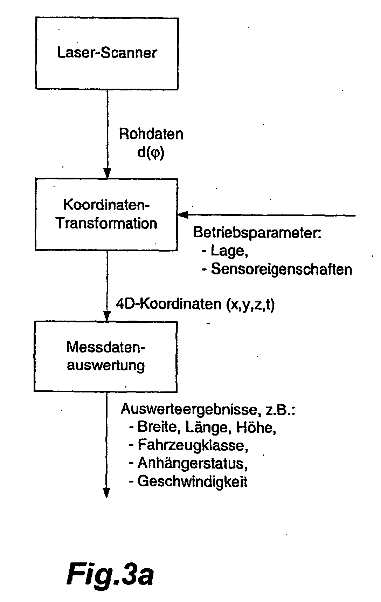

In Fig. 3a ist nochmals der grundlegende Ablauf von Meßdatenerfassung und -auswertung zusammengestellt. Laserscanner und Auswertehardware können allenfalls auch als bauliche Einheit realisiert werden. Entfallen kann natürlich auch die hier dargestellte Umrechnung der Rohdaten in ein vierdimensionales Koordinatensystem.

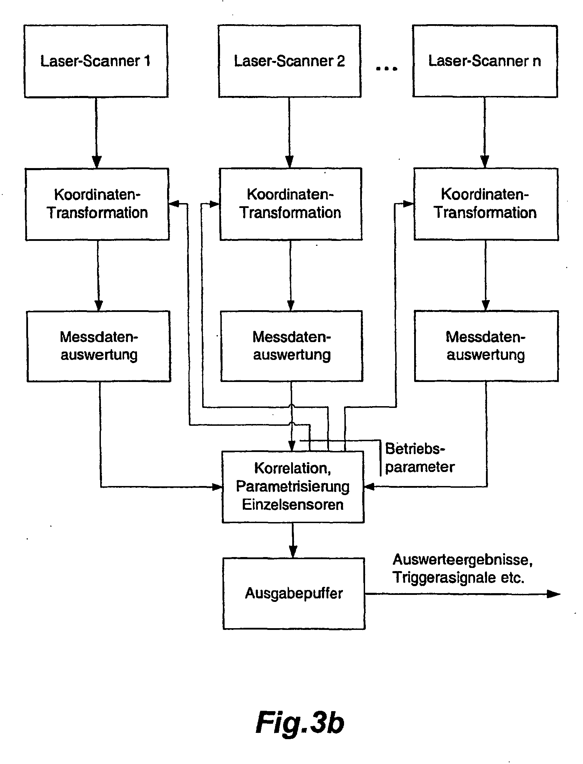

Beim Einsatz eines Verbundes von Einzelsensoren, wie in den Fig. 3b und Fig. 4a, b dargestellt ist, ist es günstig, die Einzelmessungen miteinander zu korrelieren, um eine mehrfache Registrierung eines Objektes zu verhindern. Durch eine geeignet gewählte Anordnung eines Verbundes von Einzelsensoren besteht zudem die Möglichkeit, auf Basis eines Einzelsensors bestimmte Meßwerte zu prüfen, sei es durch Vergleich der Geschwindigkeit der bei der Passage von zwei benachbarten Laserscannern individuell ermittelten Geschwindigkeiten im gemeinsamen lateralen Überlappungsbereich oder durch die entsprechende Zeit-Wegdifferenz, die auf Basis der bekannten relativen Anordnung der Sensoren zueinander gemeinsam mit einer geeigneten Synchronisation zwischen den Laserscannern ermittelt wurde. Etwa bei einspurigen Fahrzeugen, bei denen eine zufriedenstellende Geschwindigkeitsmessung mit einem einzelnen Scanner nicht möglich ist, kann aus letztgenanntem Verfahren eine Geschwindigkeit abgeleitet und der Objektrepräsentation des Fahrzeuges zugewiesen werden.

Üblicherweise ist es erforderlich, Meßwerte bzw. Triggerinformationen genau dann bereitzustellen, wenn entweder die Fahrzeugfront oder das Heck des Fahrzeuges eine definierte longitudinale Position erreicht hat. Dazu wird z.B. auf Basis der zuvor ermittelten Meß- und Zeitwerte die aktuelle longitudinale Position des Fahrzeuges errechnet, so daß die Ausgabe der Meßergebnisse und/oder der Triggersignale für die allfälligen weiteren Geräte unabhängig von der lateralen Position dann erfolgt, wenn sich das Fahrzeug an einer definierten longitudinalen Position befindet. D.h., da mit dem hier beschriebenen Verfahren der longitudinale Meßbereich unter anderem abhängig von der lateralen Fahrzeugposition ist, ist es sinnvoll, auf Basis der ermittelten Geschwindigkeit und aufgrund bereits ermittelter Lage- und Zeitwerte über die aktuelle longitudinale Position den genauen Ausgabezeitpunkt zu errechnen, um der erwähnten Anforderung zu entsprechen. Dies wird in Fig. 3b durch den Ausgabepuffer angedeutet.

Wenn die zeitgenaue Ausgabe auch bei Stop-and-go-Verkehr korrekt funktionieren soll, kann ergänzend zum bisher dargestellten Verfahren zusätzlich ein orthonormal zur Fahrtrichtung montierter Laserscanner 11 oder ein anderer geeigneter Sensor im Bereich der Triggerlinie montiert werden, wie in Fig. 5a dargestellt.

Sollen ausgewählte Fahrzeugtypen (z.B. Lastkraftwagen, Busse) über einen größeren Beobachtungsbereich, als es nach dem beschriebenen Verfahren möglich ist, auch bei Stop-and-go-Verkehr in longitudinaler Richtung verfolgt werden, so können an geeigneten Stellen Laserscanner 12 montiert werden, die entlang einer Meßebene parallel zur Fahrtrichtung messen, siehe Fig. 5b.

Durch Einbringung von geeigneten Sensoren in die Fahrbahn (Drucksensoren, Bodenschleifen etc.) oder durch geeignete Anordnung von optischen Sensoren (Kameras, Laserscanner etc.), die eine Erkennung von Fahrzeugachsen gestatten, kann das dargestellte Verfahren in der Weise verallgemeinert werden, daß als zusätzliche Objekteigenschaft auch die Achszahl passierender Fahrzeuge ermittelt wird.

Aus den bisherigen Betrachtungen geht hervor, daß eine Vermessung der dreidimensionalen Geometrie sowie der Geschwindigkeit auf einfache, kostengünstige und störungsunanfällige Weise möglich ist, und daß zudem durch die zeitliche Verfolgung von Objektanfang und -ende im Beobachtungsbereich auch eine Erkennung der Fahrtrichtung möglich ist. Das Verfahren und die Vorrichtung sind demnach ohne weitere Maßnahmen zur Erkennung von in die falsche Richtung fahrenden Fahrzeugen geeignet.

Es ist leicht zu erkennen, daß durch mehrfaches Passierenlassen eines Fahrzeuges bekannter Geometrie mit gleichbleibender Geschwindigkeit möglich ist, die tatsächliche Verdrehung des Laserscanners zu ermitteln, indem bei ungefährer Angabe der Lage des Laserscanners die gemessenen Längenwerte der tatsächlichen Fahrzeuglänge gegenübergestellt und auf diese Weise der wahre Montagewinkel des Laserscanners ermittelt wird.

Ein weiterer Vorzug des hier dargestellten Verfahrens und der hier dargestellten Vorrichtung liegt in der robusten Erkennung von nur sehr kurzen Niveauunterschieden im Längsprofil, wie etwa der Lücke zwischen Führerkabine und Aufbau eines Lastkraftwagens oder der Lücke zwischen Zugfahrzeugen und Anhängern mit Kurzkupplung. Durch die Schrägstellung wird erreicht, daß selbst bei sehr hohen Geschwindigkeiten auch bei relativ niedriger Abtastrate des Laserscanners diese für Klassifizierungsaufgaben sehr aufschlußreichen Basisdaten zuverlässig erfaßt werden können.

Die Erfindung ist selbstverständlich nicht auf die dargestellten Ausführungsbeispiele beschränkt, sondern umfaßt alle Varianten und Modifikationen, die in den Rahmen der angeschlossenen Patentansprüche fallen.

**Patentansprüche**

1. Verfahren zur geometrischen Vermessung und Geschwindigkeitsbestimmung von sich auf einer Fahrbahn in Längsrichtung derselben bewegenden Fahrzeugen (5) mit Hilfe zumindest eines Laserscanners (1), der oberhalb des Fahrbahnniveaus montiert ist und die Fahrbahn bzw. ein sich darauf in Fahrtrichtung (2) bewegendes Fahrzeug innerhalb eines begrenzten Meßbereiches in einer auf die Fahrbahn bzw. das Fahrzeug gerichteten Meßebene abtastet und als Meßdaten eines Abtastzyklus ein Profil des Fahrzeuges in der Meßebene erzeugt, wobei die Meßebene des Laserscanners (1) in einem Winkel gegen die Normalebene zur Fahrtrichtung (2) verdreht ist, und wobei aus den Meßdaten des Laserscanners eine zeitbezogene räumliche Repräsentation ($P_z$) eines Fahrzeuges (5) ermittelt wird, aus welcher unter Berücksichtigung einer typischen Fahrzeugform sowohl zumindest die Länge als auch die Geschwindigkeit des Fahrzeuges bestimmt werden, **dadurch gekennzeichnet, daß** mit Hilfe mehrerer, über die Fahrbahnbreite verteilt angeordneter Laserscanner (1) der genannten Art ein die Meßebenen zweier oder mehrerer der Laserscanner (1) durchfahrendes Fahrzeug durch Auswertung der Meßdaten der Laserscanner (1) im Verbund als ein und dasselbe Fahrzeug erkannt wird.

2. Verfahren nach Anspruch 1, **dadurch gekennzeichnet, daß** in den zeitlich aufeinanderfolgenden Profilen der Repräsentation ($P_z$) jener einer Fahrzeugkontur zugeordnete Meßpunkt ($P_1$) ermittelt wird, welcher zu oder bevorzugt vor einem ersten Zeitpunkt ($t_a$) eine signifikante (7) longitudinale Position (6) in Fahrtrichtung (2) einnimmt, daß die weiteren Positionsveränderungen (8-10) des Meßpunktes ($P_1$) in den darauffolgenden Profilen ermittelt werden, bis zu oder bevorzugt nach einem späteren zweiten Zeitpunkt ($t_b$) vorübergehend keine signifikante Positionsveränderung (10) mehr erfolgt, und daß die Geschwindigkeit des Fahrzeuges (5) aus der Weg-Zeitdifferenz (($x_b$-$x_a$)/($t_b$-$t_a$)) der zu den genannten Zeitpunkten ($t_a$, $t_b$) ermittelten Positionen ($x_a$, $x_b$) des Meßpunktes ($P_1$) bestimmt wird.

3. Verfahren nach Anspruch 2, **dadurch gekennzeichnet, daß** die signifikante (7) longitudinale Position (6) die maximale ($x_1$) - oder minimale - longitudinale Position (6) der Fahrzeugkontur ist.

4. Verfahren nach Anspruch 3, **dadurch gekennzeichnet, daß** in den zeitlich aufeinanderfolgenden Profilen jener einer Fahrzeugkontur zugeordnete Meßpunkt ($P_{ende}$) ermittelt wird, welcher zu einem dritten Zeitpunkt ($t_{ende}$) eine minimale ($x_{ende}$) - bzw. maximale - longitudinale Position (6) in Fahrtrichtung (2) einnimmt, und daß die Länge des Fahrzeuges (5) aus der zuvor ermittelten Geschwindigkeit anhand der Gleichung

$$Länge = x_1 + (t_{ende} - t_1) \cdot Geschwindigkeit - x_{ende}$$

bestimmt wird.

5. Verfahren nach einem der Ansprüche 1 bis 4, **dadurch gekennzeichnet, daß** die bestimmte Geschwindigkeit zur Skalierung der räumlichen Repräsentation ($P_z$) verwendet wird, um daraus die dreidimensionale Geometrie des Fahrzeuges zu ermitteln.

6. Verfahren nach einem der Ansprüche 1 bis 5, **dadurch gekennzeichnet, daß** die Längsachsensymmetrie typischer Fahrzeugformen zur Korrektur der Meßdaten herangezogen wird.

7. Verfahren nach einem der Ansprüche 1 bis 6, **dadurch gekennzeichnet, daß** die Weg-Zeitdifferenz bei der Durchfahrt zweier Meßebenen zur Überprüfung der vom ersten Laserscanner ermittelten Geschwindigkeit herangezogen wird und bei einer Fehlermittlung derselben durch den ersten Laserscanner dem Fahrzeug eine aus der Weg-Zeitdifferenz bestimmte Geschwindigkeit und Fahrzeuglänge zugewiesen werden.

8. Verfahren nach einem der Ansprüche 1 bis 7, **dadurch gekennzeichnet, daß** das Passieren eines weiteren, quer zur Fahrbahn abtastenden Laserscanners (11) zur Triggerung weiterer Geräte, wie Kameras usw., herangezogen wird und/oder die Ausgabe der bestimmten Geometrie- und Geschwindigkeitsdaten auslöst.

9. Verfahren nach einem der Ansprüche 1 bis 7, **dadurch gekennzeichnet, daß** das Ermitteln einer vorgegebenen Längsposition des Fahrzeuges auf der Fahrbahn zur Triggerung weiterer Geräte, wie Kameras usw., herangezogen wird und/oder die Ausgabe der bestimmten Geometrie- und Geschwindigkeitsdaten auslöst.

10. Verfahren nach einem der Ansprüche 1 bis 9, **dadurch gekennzeichnet, daß** mit Hilfe zumindest eines weiteren, längs der Fahrbahn abtastenden Laserscanners (12) die Beobachtung und Verfolgung ausgewählter Fahrzeugtypen über einen größeren Fahrbahnlängsabschnitt fortgesetzt wird.

11. Verfahren nach einem der Ansprüche 1 bis 10, **dadurch gekennzeichnet, daß** mit Hilfe von Sensoren, bevorzugt Drucksensoren in der Fahrbahn, die Anzahl von Fahrzeugachsen eines Fahrzeuges ermittelt wird.

12. Verfahren nach einem der Ansprüche 1 bis 11, **dadurch gekennzeichnet, daß** aus der mehrmaligen Passage eines Fahrzeuges bekannter Geometrie und bekannter Geschwindigkeit die genaue Einbaulage des Laserscanners (1) ermittelt wird.

13. Vorrichtung zur geometrischen Vermessung und Geschwindigkeitsbestimmung von sich auf einer Fahrbahn in Längsrichtung derselben bewegenden Fahrzeugen (5), mit zumindest einem Laserscanner (1), der oberhalb des Fahrbahnniveaus montiert ist und die Fahrbahn bzw. ein sich darauf in Fahrtrichtung (2) bewegendes Fahrzeug innerhalb eines begrenzten Meßbereiches in einer auf die Fahrbahn bzw. das Fahrzeug gerichteten Meßebene abtastet und als Meßdaten eines Abtastzyklus ein Profil des Fahrzeuges in der Meßebene erzeugt, und mit einem an den Laserscanner angeschlossenen Computersystem zur Auswertung der Meßdaten, wobei die Meßebene des Laserscanners (1) in einem Winkel gegen die Normalebene zur Fahrtrichtung (2) verdreht ist, und das Computersystem aus den Meßdaten des Laserscanners eine zeitbezogene räumliche Repräsentation ($P_z$) eines Fahrzeuges (5) ermittelt und daraus unter Berücksichtigung einer typischen Fahrzeugform sowohl zumindest die Länge als auch die Geschwindigkeit des Fahrzeuges bestimmt, **dadurch gekennzeichnet, daß** mehrere Laserscanner (1) der genannten Art über die Fahrbahnbreite verteilt angeordnet sind und daß das Computersystem die Meßdaten der Laserscanner (1) im Verbund auswertet und daraus ein die Meßebenen zweier oder mehrerer der Laserscanner durchfahrendes Fahrzeug als ein und dasselbe Fahrzeug erkennt.

14. Vorrichtung nach Anspruch 13, **dadurch gekennzeichnet, daß** das Computersystem in den zeitlich aufeinanderfolgenden Profilen der Repräsentation ($P_z$) jenen einer Fahrzeugkontur zugeordnete Meßpunkt ($P_1$) ermittelt, welcher zu oder bevorzugt vor einem ersten Zeitpunkt ($t_a$) eine signifikante (7) longitudinale Position (6) in Fahrtrichtung (2) einnimmt, die weiteren Positionsveränderungen (8-10) des Meßpunktes ($P_1$) in den darauffolgenden Profilen ermittelt, bis zu oder bevorzugt nach einem späteren zweiten Zeitpunkt ($t_b$) vorübergehend keine signifikante Positionsveränderung (10) mehr erfolgt, und die Geschwindigkeit des Fahrzeuges (5) aus der Weg-Zeitdifferenz (($x_b$-$x_a$) / ($t_b$-$t_a$)) der zu den genannten Zeitpunkten ($t_a$, $t_b$) ermittelten Positionen ($x_a$, $x_b$) des Meßpunktes ($P_1$) bestimmt.

15. Vorrichtung nach Anspruch 14, **dadurch gekennzeichnet, daß** die signifikante (7) longitudinale Position (6) die maximale ($x_1$) - oder minimale - longitudinale Position (6) der Fahrzeugkontur ist.

16. Vorrichtung nach Anspruch 15, **dadurch gekennzeichnet, daß** das Computersystem in den zeitlich aufeinanderfolgenden Profilen jenen einer Fahrzeugkontur zugeordnete Meßpunkt ($P_{ende}$) ermittelt, welcher zu einem dritten Zeitpunkt ($t_{ende}$) eine minimale ($x_{ende}$) - bzw. maximale - longitudinale Position (6) in Fahrtrichtung (2) einnimmt, und die Länge des Fahrzeuges (5) aus der zuvor ermittelten Geschwindigkeit anhand der Gleichung

$$Länge = x_1 + (t_{ende} - t_1) \cdot Geschwindigkeit - x_{ende}$$

bestimmt.

17. Vorrichtung nach einem der Ansprüche 13 bis 16, **dadurch gekennzeichnet, daß** das Computersystem die bestimmte Geschwindigkeit zur Skalierung der räumlichen Repräsentation ($P_z$) heranzieht und daraus die dreidimensionale Geometrie des Fahrzeuges ermittelt.

18. Vorrichtung nach einem der Ansprüche 13 bis 17, **dadurch gekennzeichnet, daß** das Computersystem die Längsachsensymmetrie typischer Fahrzeugformen zur Korrektur der Meßdaten heranzieht.

19. Vorrichtung nach einem der Ansprüche 13 bis 18, **dadurch gekennzeichnet, daß** das Computersystem die Weg-Zeitdifferenz bei der Durchfahrt zweier Meßebenen zur Überprüfung der vom ersten Laserscanner ermittelten Geschwindigkeit heranzieht und bei einer Fehlermittlung derselben durch den ersten Laserscanner dem Fahrzeug eine aus der Weg-Zeitdifferenz bestimmte Geschwindigkeit und Fahrzeuglänge zuweist.

20. Vorrichtung nach einem der Ansprüche 13 bis 19, **dadurch gekennzeichnet, daß** ein weiterer, quer zur Fahrbahn abtastender Laserscanner (11) vorgesehen ist, dessen Passieren weitere Geräte, wie Kameras usw., triggert und/oder die Ausgabe der bestimmten Geometrie- und Geschwindigkeitsdaten auslöst.

21. Vorrichtung nach einem der Ansprüche 13 bis 20, **dadurch gekennzeichnet, daß** das Ermitteln einer vorgegebenen Längsposition des Fahrzeuges auf der Fahrbahn durch das Computersystem weitere Geräte, wie Kameras usw., triggert und/oder die Ausgabe der bestimmten Geometrie- und Geschwindigkeitsdaten auslöst.

22. Vorrichtung nach einem der Ansprüche 13 bis 21, **dadurch gekennzeichnet, daß** zumindest ein weiterer, längs der Fahrbahn abtastender Laserscanner (12) vorgesehen ist, welcher die Beobachtung und Verfolgung ausgewählter Fahrzeugtypen über einen größeren Fahrbahnlängsabschnitt fortsetzt.

23. Vorrichtung nach einem der Ansprüche 13 bis 22, **dadurch gekennzeichnet, daß** Sensoren, bevorzugt Drucksensoren in der Fahrbahn, zur Zählung von Fahrzeugachsen vorgesehen sind.

**Claims**

1. Method of geometrically surveying, and of determining the speed of, vehicles (5) moving on a roadway in the longitudinal direction thereof, with the aid of at least one laser scanner (1) which is mounted above the level of the roadway and which scans the roadway or a vehicle moving thereon in the direction of travel (2) within a limited measurement range in a measurement plane directed at the roadway or at the vehicle and which generates, as measurement data of a scanning cycle, a profile of the vehicle in the measurement plane, the measurement plane of the laser scanner (1) being turned away at an angle from the plane normal to the direction of travel (2) and, from the measurement data of the laser scanner, there being ascertained a time-related spatial representation ($P_z$) of a vehicle (5), from which representation, by taking into account a typical vehicle shape, both at least the length and also the speed of the vehicle are determined, **characterised in**

**that**, with the aid of a plurality of laser scanners (1) of the mentioned kind arranged distributed across the width of the roadway, a vehicle travelling through the measurement planes of two or more of the laser scanners (1) is recognised as one and the same vehicle by evaluation of the measurement data of the laser scanners (1) in association.

2. Method according to claim 1, **characterised in that** in the temporally successive profiles of the representation ($P_z$) there is ascertained that measurement point ($P_1$) associated with a vehicle contour which, at, or preferably before, a first timepoint ($t_a$), occupies a significant (7) longitudinal position (6) in the direction of travel (2); the further position changes (8 - 10) of the measurement point ($P_1$) are ascertained in the subsequent profiles until at, or preferably after, a later, second timepoint ($t_b$) a significant position change (10) no longer occurs within a short time; and the speed of the vehicle (5) is determined from the distance-time difference $((x_b - x_a)/(t_b - t_a))$ of the positions ($x_a$, $x_b$) of the measurement point ($P_1$) ascertained at the mentioned timepoints ($t_a$, $t_b$).

3. Method according to claim 2, **characterised in that** the significant (7) longitudinal position (6) is the maximum ($x_1$) - or minimum - longitudinal position (6) of the vehicle contour.

4. Method according to claim 3, **characterised in that** in the temporally successive profiles there is ascertained that measurement point ($P_{end}$) associated with a vehicle contour which at a third timepoint ($t_{end}$) occupies a minimum ($x_{end}$) - or maximum - longitudinal position (6) in the direction of travel (2); and using the equation

$$length = x_1 + (t_{end} - t_1) \bullet speed - x_{end}$$

the length of the vehicle (5) is determined from the previously ascertained speed.

5. Method according to one of claims 1 to 4, **characterised in that** the determined speed is used for scaling the spatial representation ($P_z$) in order to ascertain therefrom the three-dimensional geometry of the vehicle.

6. Method according to one of claims 1 to 5, **characterised in that** the longitudinal axial symmetry of typical vehicle shapes is used for correction of the measurement data.

7. Method according to one of claims 1 to 6, **characterised in that** the distance-time difference on travel through two measurement planes is used for verifying the speed ascertained by the first laser scanner and, in the event of an error in the ascertaining thereof by the first laser scanner, the vehicle is assigned a speed and vehicle length determined from the distance-time difference.

8. Method according to one of claims 1 to 7, **characterised in that** the passing of a further laser scanner (11) scanning across the roadway is used for triggering further devices, such as cameras etc., and/or initiates the outputting of the specific geometry and speed data.

9. Method according to one of claims 1 to 7, **characterised in that** ascertainment of a predetermined longitudinal position of the vehicle on the roadway is used for triggering further devices, such as cameras etc., and/or initiates the outputting of the specific geometry and speed data.

10. Method according to one of claims 1 to 9, **characterised in that**, with the aid of at least one further laser scanner (12) scanning along the roadway, the observation and tracking of selected vehicle types is continued over a relatively large longitudinal roadway region.

11. Method according to one of claims 1 to 10, **characterised in that**, with the aid of sensors, preferably pressure sensors in the roadway, the number of vehicle axles of a vehicle is ascertained.

12. Method according to one of claims 1 to 11, **characterised in that** the exact installation position of the laser scanner (1) is ascertained from the repeated passage of a vehicle of known geometry and of known speed.

13. Apparatus for geometrically surveying, and for determining the speed of, vehicles (5) moving on a roadway in the longitudinal direction thereof, having at least one laser scanner (1) which is mounted above the level of the roadway and which scans the roadway or a vehicle moving thereon in the direction of travel (2) within a limited measurement range in a measurement plane directed at the roadway or at the vehicle and which generates, as measurement data of a scanning cycle, a profile of the vehicle in the measurement plane, and having a computer system connected to the laser scanner for evaluation of the measurement data, the measurement plane of the laser scanner (1) being turned away at an angle from the plane normal to the direction of travel (2), and the computer system ascertaining, from the measurement data of the laser scanner, a time-related spatial representation ($P_z$) of a vehicle (5) and determining therefrom, by taking into account a typical vehicle shape, both at least the length and also the speed of the vehicle, **characterised in that** a plurality of laser scanners (1) of the mentioned kind are arranged distributed across the width of the roadway; and the computer system evaluates the measurement data of the laser scanners (1) in association and recognises therefrom a vehicle travelling through the measurement planes of two or more of the laser scanners as one and the same vehicle.

14. Apparatus according to claim 13, **characterised in that** the computer system ascertains, in the temporally successive profiles of the representation ($P_z$), that measurement point ($P_1$) associated with a vehicle contour which, at, or preferably before, a first timepoint ($t_a$), occupies a significant (7) longitudinal position (6) in the direction of travel (2), ascertains the further position changes (8 - 10) of the measurement point ($P_1$) in the subsequent profiles until at, or preferably after, a later, second timepoint ($t_b$) a significant position change (10) no longer occurs within a short time, and determines the speed of the vehicle (5) from the distance-time difference (($x_b$ - $x_a$)/($t_b$ - $t_a$)) of the positions ($x_a$, $x_b$) of the measurement point ($P_1$) ascertained at the mentioned timepoints ($t_a$, $t_b$).

15. Apparatus according to claim 14, **characterised in that** the significant (7) longitudinal position (6) is the maximum ($x_1$) - or minimum - longitudinal position (6) of the vehicle contour.

16. Apparatus according to claim 15, **characterised in that** the computer system ascertains, in the temporally successive profiles, that measurement point ($P_{end}$) associated with a vehicle contour which at a third timepoint ($t_{end}$) occupies a minimum ($x_{end}$) - or maximum - longitudinal position (6) in the direction of travel (2), and using the equation

$$length = x_1 + (t_{end} - t_1) \cdot speed - x_{end}$$

determines the length of the vehicle (5) from the previously ascertained speed.

17. Apparatus according to one of claims 13 to 16, **characterised in that** the computer system uses the determined speed for scaling the spatial representation ($P_z$) and ascertains therefrom the three-dimensional geometry of the vehicle.

18. Apparatus according to one of claims 13 to 17, **characterised in that** the computer system uses the longitudinal axial symmetry of typical vehicle shapes for correction of the measurement data.

19. Apparatus according to one of claims 13 to 18, **characterised in that** the computer system uses the distance-time difference on travel through two measurement planes for verifying the speed ascertained by the first laser scanner and, in the event of an error in the ascertaining thereof by the first laser scanner, assigns the vehicle a speed and vehicle length determined from the distance-time difference.

20. Apparatus according to one of claims 13 to 19, **characterised in that** a further laser scanner (11) scanning across the roadway is provided, the passing of which triggers further devices, such as cameras etc., and/or initiates the outputting of the specific geometry and speed data.

21. Apparatus according to one of claims 13 to 20, **characterised in that** ascertainment of a predetermined longitudinal position of the vehicle on the roadway by the computer system triggers further devices, such as cameras etc., and/or initiates the outputting of the specific geometry and speed data.

22. Apparatus according to one of claims 13 to 21, **characterised in that** at least one further laser scanner (12) scanning along the roadway is provided, which continues the observation and tracking of selected vehicle types over a relatively large longitudinal roadway region.

23. Apparatus according to one of claims 13 to 22, **characterised in that** sensors, preferably pressure sensors in the roadway, are provided for counting vehicle axles.

**Revendications**

1. Procédé de mesure géométrique et de détermination de vitesse de véhicules (5) qui se déplacent sur une voie de circulation dans la direction longitudinale de cette dernière, à l'aide d'au moins un scanner à laser (1), qui est monté au-dessus du niveau de la voie de circulation et explore la voie de circulation où un véhicule est susceptible de se déplacer dans la direction de déplacement (2), à l'intérieur d'une zone limitée de mesure dans un plan de mesure dirigé sur la voie de circulation et éventuellement sur le véhicule, et produit, en tant que données de mesure d'un cycle d'exploration, un profil du véhicule dans le plan de mesure, dans lequel le plan de mesure du scanner à laser (1) tourne sur un angle par rapport au plan perpendiculaire à la direction de déplacement (2), et dans lequel une représentation spatiale ($P_z$) dans le temps d'un véhicule (5) est déterminée à partir des données de mesure du scanner à laser, à partir de laquelle aussi bien au moins la longueur que la vitesse du véhicule sont déterminées en tenant compte d'une forme typique de véhicule, **caractérisé en ce qu'**à l'aide de plusieurs scanners à laser (1) du type indiqué, disposés d'une manière répartie sur la largeur de la voie de circulation, un véhicule qui franchit les plans de mesure de deux ou de plusieurs des scanners à laser (1), est identifié comme étant un même véhicule, par évaluation des données de mesure des scanners à laser (1) en combinaison.

2. Procédé selon la revendication 1, **caractérisé en ce qu'**on détermine un point de mesure ($P_1$), qui est associé à chaque contour de véhicule dans les profils, qui se succèdent dans le temps, de la représentation ($P_z$), point de mesure qui prend, à un premier instant ($t_a$) ou de préférence avant un premier instant, une position longitudinale (6) significative (7) dans la direction de déplacement (2), **en ce que** les autres variations (8-10) de la position du point de mesure ($P_1$) sont déterminées dans les profils suivants jusqu'à ce qu'il ne se produise transitoirement plus aucune variation de position significative (10) jusqu'à, ou de préférence après, un second instant ultérieur ($t_b$), et **en ce que** la vitesse du véhicule (5) est déterminée à partir des intervalles de temps de déplacement (($x_b$-$x_a$)/($t_b$-$t_a$)) des positions ($x_a$, $x_b$) du point de mesure ($P_1$), déterminées aux instants indiqués ($t_a$, $t_b$).

3. Procédé selon la revendication 2, **caractérisé en ce que** la position longitudinale (6) significative (7) est la position longitudinale (6) maximale ($x_1$) - ou minimale - du contour du véhicule.

4. Procédé selon la revendication 3, **caractérisé en ce que** dans les profils qui se succèdent dans le temps, on détermine chaque point de mesure ($P_{fin}$) associé à un contour du véhicule, qui a à un troisième instant ($t_{fin}$) une position longitudinale (6) minimale ($x_{fin}$) - ou maximale - dans la direction de déplacement (2), et **en ce que** la longueur du véhicule (5) est déterminée à partir de la vitesse déterminée au préalable conformément à la relation

$$longueur = x_1 + (t_{fin} - t_1) \cdot vitesse - x_{fin}.$$

5. Procédé selon l'une des revendications 1 à 4, **caractérisé en ce qu'**on utilise la vitesse déterminée pour l'étalonnage de la représentation spatiale ($P_z$) pour déterminer, à partir de là, la géométrie tridimensionnelle du véhicule.

6. Procédé selon l'une des revendications 1 à 5, **caractérisé en ce que** la symétrie de véhicule typique par rapport à l'axe longitudinal est utilisée pour la correction des données de mesure.

7. Procédé selon l'une des revendications 1 à 6, **caractérisé en ce qu'**on utilise l'intervalle de temps de déplacement lors du franchissement de deux plans de mesure pour le contrôle de la vitesse déterminée par le premier scanner à laser et que, lors d'une détermination d'erreur sur cette vitesse par le premier scanner à laser, on affecte au véhicule une vitesse déterminée par l'intervalle de temps de déplacement, et une longueur du véhicule.

8. Procédé selon l'une des revendications 1 à 7, **caractérisé en ce que** le franchissement d'un autre scanner à laser (11), qui réalise une exploration transversalement par rapport à la voie de circulation, est utilisé pour le déclenchement d'autres appareils, comme par exemple des appareils de prise de vues, etc., et/ou déclenche la délivrance des données déterminées de géométrie et de vitesse.

9. Procédé selon l'une des revendications 1 à 7, **caractérisé en ce que** la détermination d'une position longitudinale prédéterminée du véhicule sur la voie de circulation est utilisée pour le déclenchement d'autres appareils, tels que des appareils de prise de vues, etc., et/ou déclenche la délivrance des données déterminées de géométrie de vitesse.

10. Procédé selon l'une des revendications 1 à 9, **caractérisé en ce qu'**à l'aide d'au moins un autre scanner à laser (12) qui réalise l'exploration dans la direction longitudinale de la voie de circulation, l'observation et la poursuite de suivi de type de véhicules sélectionnés se poursuivent sur un tronçon longitudinal plus important de la voie de circulation.

11. Procédé selon l'une des revendications 1 à 10, **caractérisé en ce que** le nombre des essieux d'un véhicule est déterminé à l'aide de capteurs, de préférence de capteurs de pression.

12. Procédé selon l'une des revendications 1 à 11, **caractérisé en ce que** la position précise de montage du scanner à laser (1) est déterminée à partir du passage réitéré d'un véhicule ayant une géométrie connue et une vitesse connue.

13. Dispositif pour la mesure géométrique et la détermination de vitesse de véhicule (5) se déplaçant sur une voie de circulation dans la direction longitudinale de cette dernière, comportant au moins un scanner à laser (1), qui est monté au-dessus du niveau de la voie de circulation et explore la voie de circulation où un véhicule est susceptible de se déplacer dans la direction de circulation (2), à l'intérieur d'une zone limitée de mesure dans un plan de mesure dirigé sur la voie de circulation et éventuellement le véhicule, produit, en tant que données de mesure d'un cycle d'exploration, un profil du véhicule dans le plan de mesure, et comportant un système de calculateur raccordé au scanner à laser servant à évaluer les données de mesure, dans lequel le plan de mesure du scanner à laser (1) est pivoté sur un angle par rapport au plan perpendiculaire à la direction de déplacement (2), et le système de calculateur détermine à partir des données de mesure du scanner à laser, une représentation spatiale dans le temps ($P_z$) d'un véhicule (5) et, à partir de là, détermine aussi bien au moins la longueur que la vitesse du véhicule en tenant compte d'une forme typique de véhicule, **caractérisé en ce que** plusieurs scanners à laser (1) du type indiqué sont disposés en étant répartis sur la largeur de la voie de circulation et que le système d'ordinateur explore les données de mesure des scanners à laser (1) en combinaison et identifie à partir de là un véhicule franchissant les plans de mesure de deux ou de plusieurs scanners à laser, comme étant un même véhicule.

14. Dispositif selon la revendication 13, **caractérisé en ce que** le système de calculateur détermine un point de mesure ($P_1$), qui est associé à chaque contour de véhicule dans les profils, qui se succèdent dans le temps, de la représentation ($P_z$), point de mesure qui prend à un premier instant ($t_a$), ou de préférence avant un le premier instant, une position longitudinale (6) significative (7) dans la direction de déplacement (2), **en ce que** les autres variations (8-10) de la position du point de mesure ($P_1$) sont déterminées dans les profils suivants jusqu'à ce qu'il ne se produise transitoirement plus aucune variation de position significative (10) jusqu'à ou de préférence après un second instant ultérieur ($t_b$), et **en ce que** la vitesse du véhicule (5) est déterminée à partir des intervalles de temps de déplacement ( $(x_b-x_a) / (t_b-t_a)$ ) des positions ($x_a$, $x_b$) du point de mesure ($P_1$), déterminées aux instants indiqués ($t_a$, $t_b$).

15. Dispositif selon la revendication 14, **caractérisé en ce que** la position longitudinale (6) significative (7) est la position longitudinale (6) maximale ($x_1$) - ou minimale - du contour du véhicule.

16. Dispositif selon la revendication 15, **caractérisé en ce que** le système de calculateur détermine dans les profils qui se succèdent dans le temps, le point de mesure ($P_{fin}$) associé à un contour du véhicule, qui a à un troisième instant ($t_{fin}$) une position longitudinale (6) minimale ($x_{fin}$) - ou maximale - dans la direction de déplacement (2), et **en ce que** la longueur du véhicule (5) est déterminée à partir de la vitesse déterminée au préalable conformément à la relation

$$\text{longueur} = x_1 + (t_{fin} - t_1) - \text{vitesse} - x_{fin}.$$

17. Dispositif selon l'une des revendications 13 à 16, **caractérisé en ce que** le système de calculateur utilise la vitesse déterminée pour l'étalonnage de la représentation spatiale ($P_z$) et détermine, à partir de là, la géométrie tridimensionnelle du véhicule.

18. Dispositif selon l'une des revendications 13 à 17, **caractérisé en ce que** le système de calculateur utilise la symétrie à axe longitudinal de forme typique de véhicules pour corriger des données de mesure.

19. Dispositif selon l'une des revendications 13 à 18, **caractérisé en ce que** le système d'ordinateur utilise l'intervalle de temps de déplacement lors du franchissement de deux plans de mesure pour le contrôle de la vitesse déterminée par le premier scanner à laser et que, lors d'une détermination d'erreur sur cette vitesse par le premier scanner à laser, affecte au véhicule une vitesse déterminée par l'intervalle de temps de déplacement, et une longueur du véhicule.

20. Dispositif selon l'une des revendications 13 à 19, **caractérisé en ce qu'**il est prévu un autre scanner à laser (11), qui réalise une exploration transversalement par rapport à la voie de circulation et dont le franchissement déclenche d'autres appareils, tels que des appareils de prise de vues, etc., et/ou déclenche la délivrance des données déterminées de géométrie et de vitesse.

21. Dispositif selon l'une des revendications 13 à 20, **caractérisé en ce que** la détermination d'une position longitudinale prédéterminée du véhicule sur la voie de circulation est utilisée pour le déclenchement d'autres appareils, tels que des appareils de prise de vues, etc., et/ou déclenche la délivrance des données déterminées de géométrie de vitesse.

22. Dispositif selon l'une des revendications 13 à 21, **caractérisé en ce qu'**il est prévu au moins un autre scanner à laser (12), qui réalise une exploration dans la direction de la voie de circulation, et qui prolonge l'observation et le suivi de types de véhicules sélectionnés sur un tronçon longitudinal plus important de la voie de circulation.

23. Dispositif selon l'une des revendications 13 à 22, **caractérisé en ce que** des capteurs, de préférence des capteurs de pression, sont prévus sur la voie de circulation pour le comptage d'essieux de véhicules.

**Fig.1a**

**Fig.1b**

**Fig.1c**

**Fig.2**

Laser-Scanner

Rohdaten
d(φ)

Koordinaten-
Transformation

Betriebsparameter:
- Lage,
- Sensoreigenschaften

4D-Koordinaten (x,y,z,t)

Messdaten-
auswertung

Auswerteergebnisse, z.B.:
- Breite, Länge, Höhe,
- Fahrzeugklasse,
- Anhängerstatus,
- Geschwindigkeit

# Fig.3a

| Laser-Scanner 1 | Laser-Scanner 2 | ... | Laser-Scanner n |
|---|---|---|---|

| Koordinaten-Transformation | Koordinaten-Transformation | Koordinaten-Transformation |
|---|---|---|

| Messdaten-auswertung | Messdaten-auswertung | Messdaten-auswertung |
|---|---|---|

Korrelation, Parametrisierung Einzelsensoren

Betriebs-parameter

Ausgabepuffer

Auswerteergebnisse, Triggerasignale etc.

**Fig.3b**

Fig.4a

Fig.4b

Fig.5a

Fig.5b